# EUROPEAN PATENT APPLICATION

(11) **EP 4 711 533 A2**
(43) Date of publication of application: **18.03.2026**
(21) Application number: 26155759.9
(22) Date of filing: 03.03.2022
(51) Int. Cl.: E02F 9/28

(54) **WEAR ASSEMBLY**

(30) Priority: 12.03.2021 US 202163160408 P
(62) Divisional of application: 22767693.9
(71) Applicant: ESCO Group LLC, Portland, OR 97210-2578 (US)
(72) Inventor: ROSKA, Michael B., Portland 97219 (US); ZENIER, Scott, H., Portland 97203 (US); LEEDHAM, Cameron R., Portland 97209 (US); STANGELAND, Kevin, S., Oregon City 97045 (US)
(74) Representative: Argyma

(57) **Abstract**

A wear assembly for securing a wear member to excavating equipment that includes a base having a nose and a wear member having a socket. The nose and socket are each provided with one or more complementary stabilizing surfaces in front and rear portions thereof.

## Description

### RELATED APPLICATIONS

This application claims priority benefits to U.S. Provisional Patent Application No. 63/160,408, filed March 12, 2021, and entitled "Wear Assembly," which is incorporated herein by reference in its entirety.

### FIELD OF THE DISCLOSURE

The present disclosure pertains to a wear assembly for securing a wear member to earth working equipment.

### BACKGROUND

Wear parts are commonly attached along the front edge of earth working equipment, such as buckets, dredge cutterheads, drumrolls, etc. to protect the equipment from wear and to enhance the digging operation. The wear parts may include teeth, shrouds, adapters, wing shrouds, picks, etc. Such wear parts typically include a base, a wear member, and a lock to releasably hold the wear member to the base.

In regard to teeth, the base typically includes a nose which is fixed to the front edge of the equipment (e.g., a lip of a bucket). The nose may be formed as an integral part of the front edge or as part of one or more adapters that are fixed to the front edge by welding or mechanical attachment. A point or adapter is fit over the nose. The point narrows to a front digging edge for penetrating and breaking up the ground. The assembled nose and point cooperatively define an opening into which the lock is received to releasably hold the point to the nose.

These kinds of wear parts are commonly subjected to harsh conditions and heavy loading. Accordingly, the wear members wear out over a period of time and need to be replaced.

### SUMMARY OF THE DISCLOSURE

The present disclosure pertains to an improved wear assembly for securing wear members to earth working equipment for enhanced wear life, utilization of material for lower end of life weight, flexibility in design for locking mechanisms, stability, strength and/or ease of replacement.

In one example, a wear member includes a mounting cavity opening in a rear end of the wear member to receive a supportive base. The mounting cavity having a front portion and a rear portion. The front portion including a first front bearing surface on a top or bottom side of the mounting cavity, two second front bearing surfaces on the top or bottom side of the mounting cavity opposite the first front bearing surface, and a front bearing wall transverse to the front bearing surfaces at a front end of the mounting cavity, the two second front bearing surfaces converging toward or away from the first front bearing surface toward a central portion of the top or bottom side, wherein the front bearing surfaces and the front bearing wall bear against complementary surfaces on the supportive base. The rear portion including a first rear bearing surface on the top or bottom side of the mounting cavity opposite the first front bearing surface, and two second rear bearing surfaces on the top or bottom side of the mounting cavity opposite the first rear bearing surface, the second rear bearing surfaces converging toward or away from the first rear bearing surface toward a central portion of the top or bottom side, wherein the rear bearing surfaces bear against complementary surfaces on the supportive base.

In one example, a wear member includes a mounting cavity opening in a rear end of the wear member to receive a supportive base. The mounting cavity having a front portion and a rear portion. The front portion including a first front bearing surface on a top or bottom side of the mounting cavity, two second front bearing surfaces on the top or bottom side of the mounting cavity opposite the first front bearing surface, and a front bearing wall transverse to the front bearing surfaces at a front end of the mounting cavity, the two second front bearing surfaces converging toward the first front bearing surface toward a central portion of the top or bottom side, wherein the front bearing surfaces and the front bearing wall bear against complementary surfaces on the supportive base. The rear portion including a first rear bearing surface on the top or bottom side of the mounting cavity opposite the first front bearing surface, and two second rear bearing surfaces on the top or bottom side of the mounting cavity opposite the first rear bearing surface, the second rear bearing surfaces converging away from the first rear bearing surface toward a central portion of the top or bottom side, wherein the rear bearing surfaces bear against complementary surfaces on the supportive base.

In another example, a wear member for earth working equipment includes a mounting cavity opening in a rear end to axially receive a supportive base. The mounting cavity including a front portion and a rear portion, the front portion including front bearing surfaces and front corners between adjacent ones of the front bearing surfaces extending around a perimeter of the front portion, and a front bearing wall transverse to the front bearing surfaces at a front end of the mounting cavity, wherein the front bearing surfaces and the front bearing wall bear against complementary surfaces on the supportive base. The second portion including rear bearing surfaces and rear corners between adjacent rear bearing surfaces extending around a perimeter of the rear portion, wherein each of the front bearing surfaces axially aligns with one of the rear corners, and wherein the rear bearing surfaces bear against complementary surfaces on the supportive base.

In another example, a wear member for earth working equipment comprising a mounting cavity opening in a rear end of the wear member to receive a supportive base, the mounting cavity including a front portion and a rear portion, the front portion including a top front bearing surface and two bottom front bearing surfaces converging away from the top front bearing surface, and the rear portion including a bottom rear bearing surface and two top rear bearing surfaces converging away from the bottom rear bearing surface, wherein the front bearing surfaces and the rear bearing surfaces bear against complementary surfaces on the supportive base.

In a further example a wear assembly includes a supportive base having a mounting portion, a wear member for earth working equipment having a mounting cavity opening in a rear end of the wear member to receive the supportive base, the mounting cavity having a front portion and a rear portion, the front portion including a first front bearing surface on a top or bottom side of the mounting cavity, two second front bearing surfaces on the top or bottom side of the mounting cavity opposite the first front bearing surface, and a front bearing wall transverse to the front bearing surfaces at a front end of the mounting cavity, the two second front bearing surfaces converging away from the first front bearing surface toward a central portion of the top or bottom side, wherein the front bearing surfaces and the front bearing wall bear against complementary surfaces on the supportive base, and the rear portion including a first rear bearing surface on the top or bottom side of the mounting cavity opposite the first front bearing surface, and two second rear bearing surfaces on the top or bottom side of the mounting cavity opposite the first rear bearing surface, the second rear bearing surfaces converging away from the first rear bearing surface toward a central portion of the top or bottom side, wherein the rear bearing surfaces bear against complementary surfaces on the supportive base; and a lock to secure the wear member to the supportive base.

In yet another example, a wear assembly includes a supportive base having a mounting portion; a wear member for earth working equipment comprising a mounting cavity opening in a rear end of the wear member to receive a supportive base, the mounting cavity including a front portion and a rear portion, the front portion including a top front bearing surface and two bottom front bearing surfaces converging away from the top front bearing surface, and the rear portion including a bottom rear bearing surface and two top rear bearing surfaces converging away from the bottom rear bearing surface, wherein the front bearing surfaces and the rear bearing surfaces bear against complementary surfaces on the supportive base; and a lock to secure the wear member to the supportive base.

In one example, a wear assembly includes a supportive base having a mounting portion; a wear member for earth working equipment comprising a mounting cavity opening in a rear end to axially receive a supportive base, the mounting cavity including a front portion and a rear portion, the front portion including front bearing surfaces and front corners between adjacent ones of the front bearing surfaces extending around a perimeter of the front portion, and a front bearing wall transverse to the front bearing surfaces at a front end of the mounting cavity, wherein the front bearing surfaces and the front bearing wall bear against complementary surfaces on the supportive base, and the second portion including rear bearing surfaces and rear corners between adjacent rear bearing surfaces extending around a perimeter of the rear portion, wherein each of the front bearing surfaces axially aligns with one of the rear corners, wherein the rear bearing surfaces bear against complementary surfaces on the supportive base; and a lock to secure the wear member to the supportive base.

In another example, a wear member for earth working equipment including a nose for mounting to in a front end of the wear member to receive a second wear member. The nose having a front portion and a rear portion. The front portion including a first front bearing surface on a top or bottom side of the nose, two second front bearing surfaces on the top or bottom side of the nose opposite the first front bearing surface, and a front bearing wall transverse to the front bearing surfaces at a front end of the nose, the two second front bearing surfaces converging away from the first front bearing surface toward a central portion of the top or bottom side, wherein the front bearing surfaces and the front bearing wall bear against complementary surfaces on the supportive base. The rear portion including a first rear bearing surface on the top or bottom side of the nose opposite the first front bearing surface, and two second rear bearing surfaces on the top or bottom side of the nose opposite the first rear bearing surface, the second rear bearing surfaces converging away from the first rear bearing surface toward a central portion of the top or bottom side, wherein the rear bearing surfaces bear against complementary surfaces on the supportive base.

In yet another example, a wear member for earth working equipment includes a nose in a front end of the wear member to receive a second wear member. The nose including a front portion and a rear portion, the front portion including a top front bearing surface and two bottom front bearing surfaces converging away from the top front bearing surface, and the rear portion including a bottom rear bearing surface and two top rear bearing surfaces converging away from the bottom rear bearing surface, wherein the front bearing surfaces and the rear bearing surfaces bear against complementary surfaces on the supportive base.

In a further example, a wear member for earth working equipment includes a nose to axially receive a second wear member. The nose including a front portion and a rear portion, the front portion including front bearing surfaces and front corners between adjacent ones of the front bearing surfaces extending around a perimeter of the front portion, and a front bearing wall transverse to the front bearing surfaces at a front end of the nose, wherein the front bearing surfaces and the front bearing wall bear against complementary surfaces on a mounting portion of the second wear member, and the second portion including rear bearing surfaces and rear corners between adjacent rear bearing surfaces extending around a perimeter of the rear portion, wherein each of the front bearing surfaces axially aligns with one of the rear corners, wherein the rear bearing surfaces bear against complementary surfaces on the mounting portion of the second wear member.

In one example, a lip of a bucket includes a mounting portion for mounting a wear member thereon. The mounting portion including having a front portion and a rear portion. The front portion including a first front bearing surface on a top or bottom side of the mounting portion, two second front bearing surfaces on the top or bottom side of the mounting portion opposite the first front bearing surface, and a front bearing wall transverse to the front bearing surfaces at a front end of the mounting portion, the two second front bearing surfaces converging away from the first front bearing surface toward a central portion of the top or bottom side, wherein the front bearing surfaces and the front bearing wall bear against complementary surfaces on the wear member. The rear portion including a first rear bearing surface on the top or bottom side of the mounting portion opposite the first front bearing surface, and two second rear bearing surfaces on the top or bottom side of the mounting portion opposite the first rear bearing surface, the second rear bearing surfaces converging away from the first rear bearing surface toward a central portion of the top or bottom side, wherein the rear bearing surfaces bear against complementary surfaces on the wear member.

In another example, a lip of a bucket includes a mounting portion for mounting a wear member thereon. The mounting portion including having a front portion and a rear portion. The front portion including a top front bearing surface and two bottom front bearing surfaces converging away from the top front bearing surface, and the rear portion including a bottom rear bearing surface and two top rear bearing surfaces converging away from the bottom rear bearing surface, wherein the front bearing surfaces and the rear bearing surfaces bear against complementary surfaces on the supportive base.

In yet another example, a lip of a bucket includes a mounting portion for mounting a wear member thereon. The mounting portion including having a front portion and a rear portion. The front portion including front bearing surfaces and front corners between adjacent ones of the front bearing surfaces extending around a perimeter of the front portion, and a front bearing wall transverse to the front bearing surfaces at a front end of the nose, wherein the front bearing surfaces and the front bearing wall bear against complementary surfaces on a mounting portion of the second wear member, and the second portion including rear bearing surfaces and rear corners between adjacent rear bearing surfaces extending around a perimeter of the rear portion, wherein each of the front bearing surfaces axially aligns with one of the rear corners, wherein the rear bearing surfaces bear against complementary surfaces on the mounting portion of the second wear member.

In one example, a wear assembly includes a base defining a nose including a plurality of bearing surfaces axially extending substantially parallel to a longitudinal axis of the nose, the bearing surfaces including a plurality front bearing surfaces formed generally along a distal end of the base and a plurality of rear bearing surface formed on the proximal end of the nose opposite from the distal end. A wear member defining mounting cavity to be mounted onto the base, the mounting cavity formed with complementary bearing surfaces to the bearing surfaces of the nose, the complementary bearing surfaces including a plurality of front bearing surfaces formed generally along a distal end of the mounting cavity, and a plurality of rear bearing surface formed on the proximal end of the mounting cavity opposite from the distal end, wherein the plurality of rear bearing surfaces of the base and wear member are offset from the plurality of front bearing surfaces of the base and wear member, such that a front bearing surface of the base and wear member is axially aligned with a corner in the rear portion of the base and mounting cavity, respectively; and a lock to secure the wear member to the base.

In another example, a wear assembly includes a base defining a nose including a plurality of bearing surfaces axially extending substantially parallel to a longitudinal axis of the nose, the bearing surfaces including a plurality front bearing surfaces formed generally along a distal end of the base and a plurality of rear bearing surface formed on the proximal end of the nose opposite from the distal end, wherein the front and rear bearing surfaces of the base generally define a pentagonal shape, and the rear bearing surfaces of the base are situated 180 degrees in rotation about the longitudinal axis relative to the front bearing surfaces of the base. A wear member defining mounting cavity to be mounted onto the base, the mounting cavity formed with complementary bearing surfaces to the bearing surfaces of the nose, the complementary bearing surfaces including a plurality of complementary front bearing surfaces formed generally along a distal end of the mounting cavity, and a plurality of complementary rear bearing surface formed on the proximal end of the mounting cavity opposite from the distal end; and a lock to secure the wear member to the base.

In another example, a wear member includes a mounting cavity where each of the front and rear portions have two first bearing surfaces converging in one direction, and two second bearing surfaces converging in an opposite direction. The first bearing surfaces in the front portion converge at a different angle than the second bearing surfaces in the rear portion.

In a further example, a wear member includes a mounting cavity opening in a rear end to receive a supportive base. The mounting cavity is defined by front portion and a rear portion, each with a top, a bottom and side walls and having a longitudinal axis. A plurality of front bearing surfaces are formed generally along a distal end of the mounting cavity, and a plurality of rear bearing surface are formed on the proximal end of the mounting cavity opposite from the distal end. The rear bearing surfaces are offset from the front bearing surfaces, such that a front bearing surface is axially aligned with a corner in the rear portion of the socket and a rear bearing surface is axially aligned with a corner in the front portion of the socket.

In one other example, a wear member includes a mounting cavity having a front portion with a top wall and two converging bearing surfaces opposite the top wall, and a rear portion with a bottom wall and two converging bearing surfaces opposite the bottom wall to bear against complementary surfaces on the base.

In an example, a wear assembly includes a base and a wear member defining a base and mounting cavity, respectively, which are formed with complementary bearing surfaces axially extending substantially parallel to a longitudinal axis of the nose and mounting cavity. A plurality of front bearing surfaces are formed generally along a distal end of the base and mounting cavity, and a plurality of rear bearing surface are formed on the proximal end of the base and mounting cavity opposite from the distal end. The plurality of rear bearing surfaces are offset from the plurality of front bearing surfaces, such that a front bearing surface is axially aligned with a corner in the rear portion of the base and mounting cavity, and a rear bearing surface is axially aligned with a corner in the front portion of the base and mounting cavity.

In another example, a wear assembly includes a base and a wear member defining a base and mounting cavity, respectively, which are formed with complementary bearing surfaces axially extending substantially parallel to a longitudinal axis of the wear assembly. A plurality of front bearing surfaces are formed generally along a distal end of the base and mounting cavity, and a plurality of rear bearing surfaces are formed on the proximal end of the base and mounting cavity opposite from the distal end. The plurality of front bearing surfaces generally define a pentagonal shape. The plurality of rear bearing surfaces generally define a pentagonal shape, wherein the plurality of rear bearing surfaces are situated 180 degrees in rotation about the longitudinal axis relative to the front bearing surfaces.

In one other example, a wear assembly includes a nose and a complementary socket of a base and a wear member are each formed with a generally pentagon configuration in the front and a reverse pentagon configuration in the rear. This construction provides high strength and a longer useful life.

### BRIEF DESCRIPTION OF THE FIGURES

FIG. 1 is a perspective view of a wear assembly and lip in accordance with the present disclosure with a portion of the lip.
FIG. 2A is an exploded view of the wear assembly and lip of FIG. 1.
FIG. 2B is an exploded view of a second wear assembly in accordance with the present disclosure with a portion of the lip.
FIG. 3 is a perspective view of a first wear member of the wear assembly of FIG. 1.
FIG. 4 is a top view of the nose of the first wear member of FIG. 3.
FIG. 5 is a bottom view of the nose of the first wear member of FIG. 3.
FIG. 6 is a side view of the nose of the first wear member of FIG. 3.
FIG. 7 is a bottom perspective view of the nose of the first wear member of FIG. 3.
FIG. 8 is a front view of the nose of the first wear member of FIG. 3.
FIG. 9 is a partial, rear perspective view of a second wear member of the wear assembly of FIG. 1.
FIG. 10 is a rear view of the second wear member of FIG. 9.
FIG. 11 is a partial cross-sectional view of the second wear member of FIG. 10 taken along the line 11-11.
FIG. 12 is an exploded view of a nose of the third wear assembly in accordance with the present disclosure with a portion of the lip.
FIG. 13 is a perspective view of a first wear member of the third wear assembly of FIG. 12.
FIG. 14 is a top view of the nose of the first wear member of FIG. 12.
FIG. 15 is a bottom view of the nose of the first wear member of FIG. 12.
FIG. 16 is a side view of the nose of the first wear member of FIG. 12.
FIG. 17 is a front view of the nose of the first wear member of FIG. 12.
FIG. 18 is a partial, rear perspective view of a second wear member of the third wear assembly of FIG. 12.
FIG. 19 is a rear view of the second wear member of FIG. 18.
FIG. 20 is a partial cross-sectional view of the second wear member of FIG. 19 taken along the line 20-20.

### DETAILED DESCRIPTION OF THE PREFERRED EMBODIMENTS

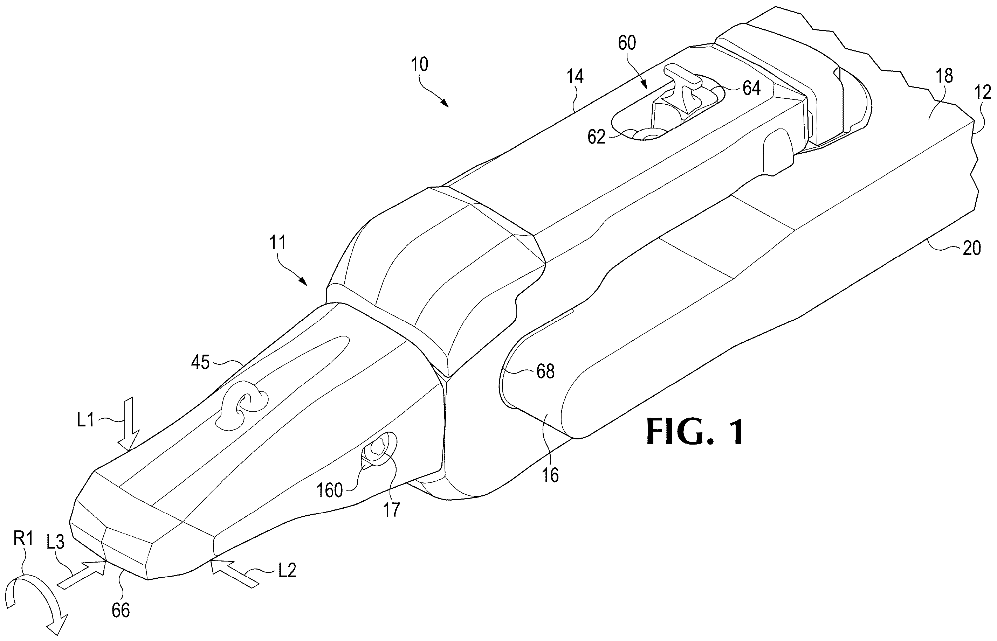

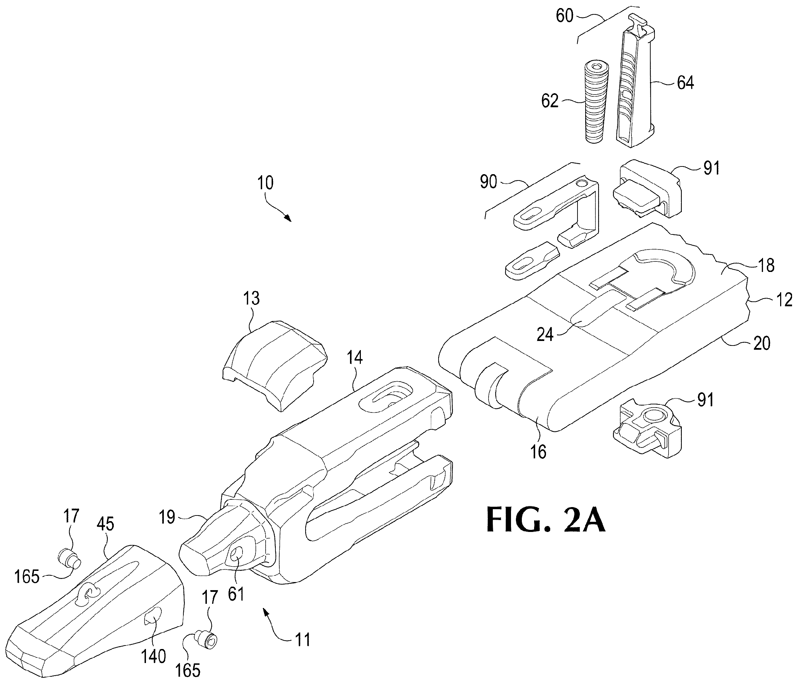

In the example of FIGS. 1 and 2A, a wear assembly 10 includes a tooth 11 having a wear member 45 that releasably secures to the nose 19 of an adapter 14, which in turn, mounts onto a support structure or base 12 of an earth working equipment. For ease of discussion, the mounting of a tooth 11 to a digging edge 12 of a bucket is disclosed herein but other kinds of wear members and/or other kinds of earth working equipment could be used. For example, while the wear members are points 45 in the illustrated examples, the wear members could be intermediate adapters, shrouds, wing shrouds, and the like. Likewise, while the illustrated support structures are lips of a bucket, the support structures could be the front edges of bucket sidewalls, dredge cutter heads, rolling drums, blades, etc. In this application, relative terms such as upper, lower, inner, outer, forward, rearward, vertical, or horizontal are used for convenience of explanation with reference to Figure 1; other orientations are possible.

In one example, the digging edge 12 is defined by the lip of a bucket (e.g., a dipper of a cable shovel) and includes a leading surface 16, an inner face 18 and an outer face 20. In the illustrated embodiment, a through-hole or keyway 24 is provided in the digging edge 12 passing through inner face 18 and outer face 20 (FIG. 2A). Although a Whisler-style lip and adapter are shown, wear members 45 such as disclosed herein can be used on a wide variety of earth working machines, can be secured to other kinds of digging edges (with or without holes), can be secured to other kinds of adapters, noses, etc., and/or secured in a variety of ways to the support structure. The leading surface 16 is shown as a curved surface but other variations are possible. While only a small portion of the digging edge 12 is shown in the drawings, the digging edge 12 may include a series of through-holes 24 for the mounting of other teeth to the bucket. Various constructions and/or other wear parts (not shown) could also be provided on other parts of the digging edge.

In the example illustrated in FIG. 2A, the base is an adapter 14 secured to digging edge 12 by a lock 60 having a threaded wedge 62 and a spool 64 and other features such as stabilizers 90 as is disclosed in U.S. Pat. No. 7,171,771 (incorporated herein by reference), but other locking configurations are possible. For example, the adapters can be secured to the digging edge by welding, bolts, other locks, etc. The illustrated tooth 11 includes a wear member 45 in the form of a point, a wear cap 13, and the adapter 14, though other configurations are possible.

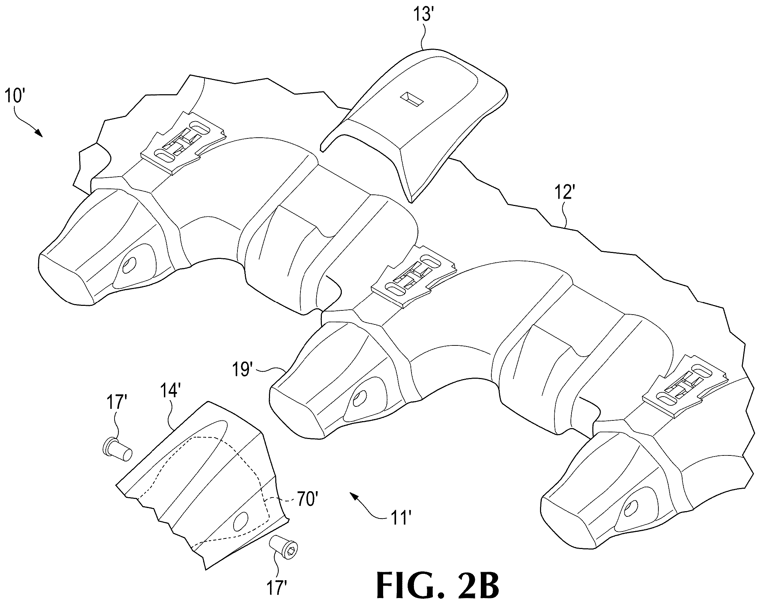

In the example illustrated in FIG. 2B, the base is a forwardly-projecting nose as part of a cast lip instead of a separately secured adapter (see, e.g., FIG. 2A). In this example, wear assembly 10' is a tooth 11' that includes a wear member 14' in the form of a point or an intermediate adapter fit onto a nose 19' of a cast digging edge 12', and a wear cap 13'. A point or tip (not shown) may be mounted on a front end nose of the wear member if the wear member is an intermediate adapter. Locks 17' are used to releasably secure the wear member to the base such as, e.g., disclosed in U.S. Patent 9,222,243 (incorporated herein by reference). Locks 17' could be used to secure tip (not shown) to an intermediate adapter 14', and intermediate adapter 14' to nose 19'. In this example, the same kind of lock is used in both cases, but different locks could be used. For example, the locks disclosed in U.S. Provisional Application 63/176,065, incorporated by reference herein. Alternatively, lock 17 could be used to secure a point 45 to the nose 19'. Herein, a wear assembly component (e.g., an intermediate adapter) may be referred to as either a wear member and/or base depending on whether in the context of the discussion the component is supporting a wear member and/or is itself being supported by a base.

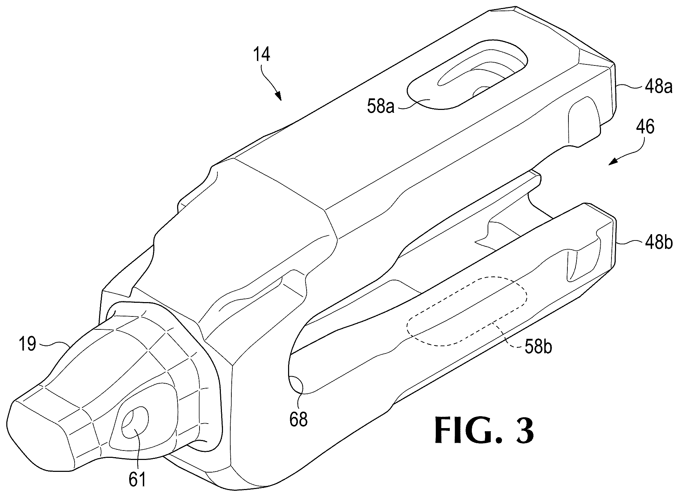

Referring to FIG. 3, the adapter 14 supports the earth-penetrating points 45 and secures them to the digging edge 12. Adapter 14 includes a forwardly projecting nose 19 for mounting the point 45, and a mounting end 70 with bifurcated legs 48a, 48b to straddle the digging edge 12. The upper leg 48a is situated to engage the inner face 18 of the digging edge 12 and the lower leg 48b is situated to engage the outside face 20 of the digging edge 12. The upper and lower legs 48a, 48b each includes a hole 58a, 58b through which the lock 60 may be inserted. The holes 58a, 58b are positioned such that when the adapter 14 is properly placed on the bucket digging edge 12, holes 58a, 58b are aligned with through-hole 24 to allow the lock 60 to fit therethrough (FIG. 2A). The legs 48a, 48b are connected via a bight portion 68.

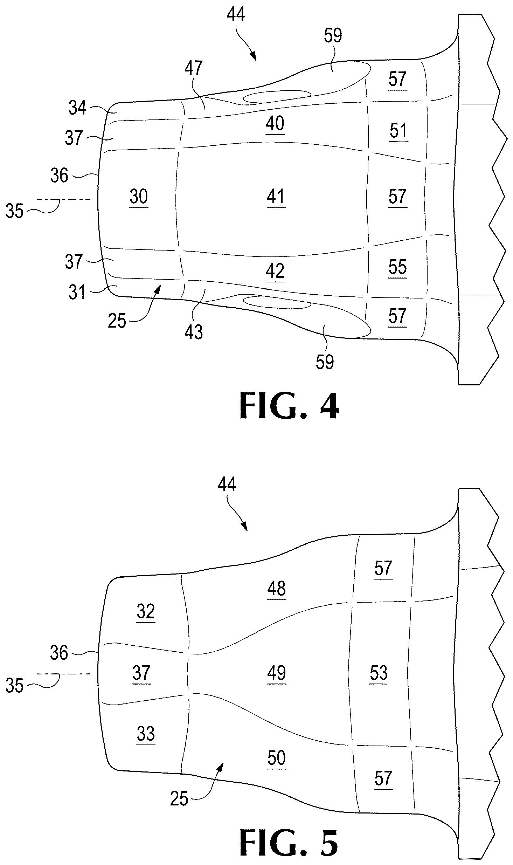

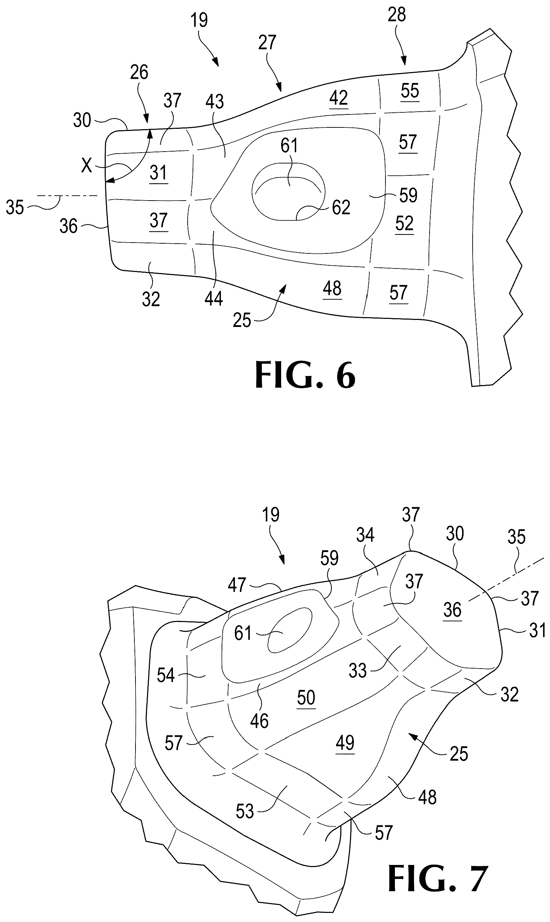

Referring to FIGS. 4-8, the nose 19 has a body 25 with a front portion 26, a rear portion 28, and a transition portion 27 (FIG. 6). The body 25 expands rearward from the front portion 26 to the rear portion 28. The transition portion 27 is located between the front portion 26 and the rear portion 28 of the nose 19. The rear portion 28 is adjacent a blended area that transitions to the adapter 14.

The front portion 26 presents a streamlined profile that improves penetration into the ground during a digging operation. In the illustrated example, the front portion 26 includes front bearing surfaces 30, 31, 32, 33, 34 and a front bearing wall 36 transverse to the front bearing surfaces 30-34, though other variations are possible. More particularly, the front bearing surfaces includes a top bearing surface 30, side bearing surfaces 31, 34, and bottom bearing surfaces 32, 33. The front bearing surfaces 30-34 and front wall 36 bear against complementary surfaces at the front of the mounting cavity or socket 70 in the wear member 45. The front wall 36 resists rearward loads L3 (FIG. 1). The bearing surfaces 30-34 could bear against complementary surfaces in the point across their entire width and length or some portion thereof. In the illustrated example, the front bearing surfaces 30-34 are generally planar though they could be formed with curves such as broad convex or concave shapes curving about axial and/or transverse axes or any combination with planar surfaces thereof. The front bearing surfaces 30-34 extend rearwardly to the transition section 27. The front bearing surfaces 30-34 extend rearwardly from front surface 36 and axially extend substantially parallel to the longitudinal axis 35 to help stabilize the supporting of the wear member 45. The term "substantially parallel" is intended to include parallel surfaces as well as those that diverge from the longitudinal angle at a small angle (e.g., of about 0-7 degrees) for manufacturing purposes and/or ease of removal. The front bearing surfaces preferably axially diverge in a rearward direction from the longitudinal axis 35 at an angle of 5 degrees or less, and most preferably at an angle of 3 degrees or less. The longitudinal axis 35 is the longitudinal axis of the nose 14 and mounting cavity 70 within the wear member 45. The longitudinal axis 35 can be generally defined as the straight line the center of front wall 36 moves along when installed into mounting cavity 70. The bearing surfaces 30-34 that extend substantially parallel to the longitudinal axis are also herein referred at times to stabilizing surfaces. Stabilizing surfaces are meant to stabilize the wear member 45 mounted onto the nose 19 against vertical, lateral, and combination loads.

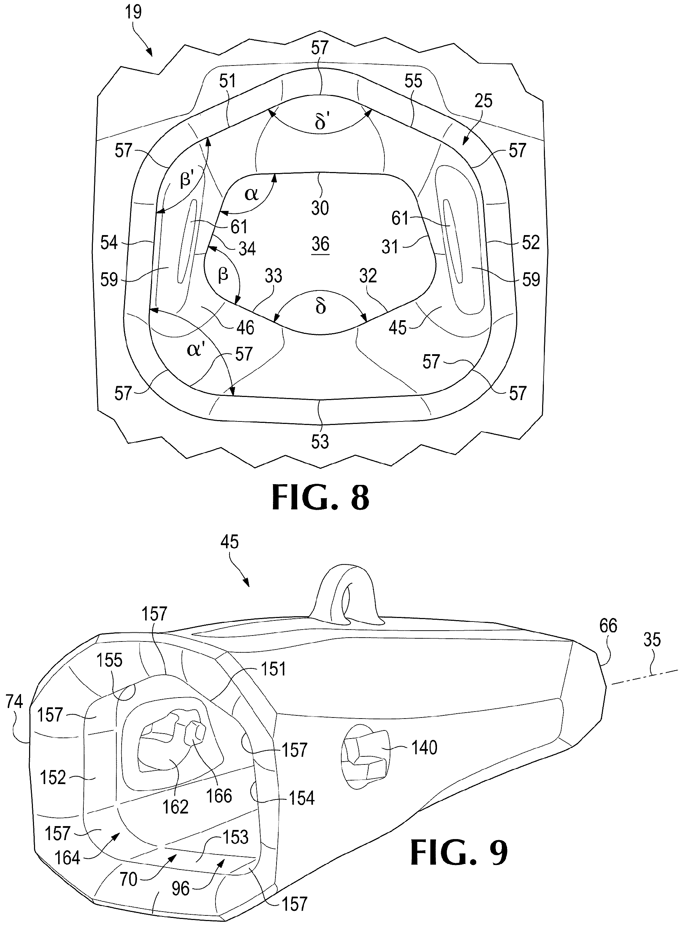

In the illustrated embodiment, the front wall 36 and the front portion 26 have a generally pentagonal shape, though other surfaces could be provided at one or more the corners. In some examples, the front wall may have other polygonal shapes. In some examples, the front wall 36 may optionally be inclined to the longitudinal axis preferably such that the front wall 36 and top surface 30 are at an acute angle X, though other perpendicular to the axis or other orientations are possible. For example, the front face is preferably planar, but can be convex, concave, curved or consisting of angular segments. In the orientation of FIG. 8, the top surface 30 is substantially parallel to a horizontal plane. The bottom bearing surfaces 32, 33 each converge downwardly towards each other in a transverse direction to make a corner of the pentagon. In other examples the top bearing surfaces 30, 31, 34 may be the bottom of the pentagon, where the pentagon converges upward. In yet other examples, the "top" of the pentagon may be at some off center angle or sideways. The use of such converging bottom bearing surfaces 32, 33 can provide increased material utilization for a lower throw away weight at the point's end of life, and a longer wear life. The side bearing surfaces 31, 34 preferably converge in an upwardly, transverse direction. Adjacent bearing surfaces 30-34 may be connected by a corner 37, which is generally rounded. The corners 37 in the front portion 26 create angles α between adjacent bearing surfaces 30 and 34 and bearing surfaces 30 and 31; angles β between bearing surfaces 31 and 32 and bearing surfaces 33 and 34; and angle δ between bottom bearing surfaces 32 and 33. In one example, angles α, β, δ each equal 108 degrees, though other combinations are possible. In another example, angles α are about 108-112 degrees, angles β are about 95-99 degrees, and angle δ is at about 128-132 degrees. The angles α, β, δ may generally range from 90-135 degrees, but other examples are possible outside the given ranges. The angles and general overall front configuration of the nose (i.e., the bearing surfaces 31-34) can vary considerably. For example, one side of the bearing surfaces may have a different angle α, β, than the other side of the bearing surfaces, such that an non-uniform shape (e.g. non-uniform sided pentagon) is created. In one such example, the surfaces 30-34 may not be uniform in length to better accommodate a lock on one side.

In the illustrated example (FIGS. 4-8), the rear portion 28 includes rear bearing surfaces 51, 52, 53, 54, 55. The rear bearing surfaces 51-55 extend rearwardly from the transition portion 27 and include top rear bearing surfaces 51, 55, side rear bearing surfaces 52, 54, and a bottom rear bearing surface 53. The rear bearing surfaces 51-55 are tiered (i.e., spaced wider apart) relative to front bearing surfaces 30-34 for enhanced strength, removability, and operation. As with the front bearing surfaces 30-34, the rear bearing surfaces 51-55 axially extend substantially parallel to the longitudinal axis 35 to aid in stabilizing and supporting the wear member 45; e.g., where they rearwardly diverge at a small angle to the longitudinal axis 35. The bearing surfaces 51--55 that extend substantially parallel to the longitudinal axis are also herein referred at times to stabilizing surfaces. The rear bearing surfaces 51-55 bear against corresponding surfaces in the mounting cavity 70 of the wear member 45, and along with the front bearing surface 30-34 act as stabilization surfaces for the wear member. The front and rear bearing surfaces 30-34, 36, 51-55 bear against complementary surfaces in the mounting cavity 70 in wear member 45 in resisting various combinations of vertical, side, rotation, and axial loads (e.g., L1, L2, L3, R1) that are applied to the wear member 45 during a digging operation (FIG. 1).

Like the front portion 26, the rear portion 28 preferably has a generally pentagonal shape, though other surfaces could be included instead of corners. The rear portion 28 has a reverse orientation with respect to the front portion 26. For example, if the front portion 26 has bearing surfaces that converge downward, the rear portion 28 has bearing surfaces that converge upward (and vice versa). Referring to FIG. 8, the top rear bearing surfaces 51, 55 converge upwardly towards each other, though other configurations are possible. In one such example, the top rear bearing surfaces 51, 53 may be flipped in orientation about the longitudinal axis, such that they converge downward and are located on the bottom. In the illustrated orientation, the bottom rear bearing surface 53 is substantially parallel to a horizontal plane. The flat nature of the bottom bearing surface 53 can allow for a constant thickness of the bottom leg 48b of the adapter 14 to reduce the rate of bottom leg wear. The side rear bearing surfaces 52, 54 converge upwardly, but other configurations are possible. Adjacent bearing surface 51-55 may be connected by a corner 57, which is generally rounded. The corners 57 create: angle α' between bottom rear bearing surfaces 53 and each side rear bearing surfaces 52 and 54; angle β' between bearing surfaces 51 and 54 and 55 and 52; and angle δ' between top rear bearing surfaces 51 and 55.

The rear bearing surfaces 51-55 are in the illustrated embodiment oriented 180 degrees relative to the orientation of the front bearing surfaces 30-34. In general, each of the corners 37 of the front portion 26 are axially aligned with one of the bearing surfaces 51-55 of the rear portion 28, and each of the corners 57 of the rear portion are axially aligned with one of the bearing surfaces 30-34 of the front portion 26. The angles between adjacent rear bearing surfaces 51-55 could all be 108 degrees or there could be differences such as discussed above with respect to the front bearing surfaces. The angles between the rear bearing surfaces can match the corresponding front bearing surfaces (i.e., with the 180 degrees reorientation). As one example, angles α can be the same as angles α', angles β could be the same as angles β', and angle δ could be the same as angle δ'. In other examples, angles α could be different than angles α', angles β could be different than angles β' and/or angle δ could be different than angle δ'.

In the illustrated example, angle α > angle α'; angle β < angle β'; and angle δ = angle δ', though other combinations of angles α', β', δ' are possible. In one example, angles α' are about 88-92 degrees, angles β' are about 117-121 degrees, and angle δ' is at about 128-132 degrees. The angles α', β', δ' may generally range from about 85-135 degrees, but other examples are possible outside the given ranges. The angles can be chosen based on a consideration of the expected loads and operation of the machine. For example, angles δ' and α could be toward the larger end of the range when heavy vertical loads (e.g., downward load L1) are commonly expected so bearing surfaces 31, 34 are closer to perpendicular to resist a downward load along with bearing surface 30, and bearing surfaces 32, 33 are closer to perpendicular to resist an upward load. The use of larger angles α and δ' can also lead to a slimmer vertical profile for better penetration. This same arrangement could, then, also be used for the rear bearing surfaces. For example, angles α' and δ could be toward the larger end to better resist vertical forces and maintain a slimmer profile. Nevertheless, other arrangements of angles are possible. The general rear configuration of the nose (i.e., the bearing surfaces 51-55) can vary considerably (e.g. in shape and dimension) from example to example and can vary considerably relative to the front end configuration.

In another example, one side of the rear bearing surfaces 51-55 may have a different angle α', β' than the other side of the rear bearing surfaces 51-55, such that an non-uniform shape is created. In this instance, the surfaces 51-55 may not be uniform in length. In one such example, the bearing surfaces in one or both the front and rear portions can have different lengths and/or different corner angles on one side of the nose as compared to the other side.

In some examples, the bottom rear bearing surface 53 may have a longer transverse extension than the top rear bearing surfaces 51, 55 on account of the inclination of side bearing surfaces 52, 54 (FIGS. 4-5 and 8). In other examples, the top rear bearing surface 51, 55 may have an equal or shorter transverse extension than the lengths of bottom rear bearing surface 53. Other variations are possible. The rear bearing surfaces can be planar or formed with a broad curve (convex or concave) . Alternatively, the rear bearing surfaces 51-55, could be formed with a curve, such as a broad convex or concave curve about a longitudinal and/or transverse axis, as disclosed above for the front bearing surfaces 30-34.

The combination of front and rear bearing surfaces 30-34, 51-55 stably support the wear member 45 on the nose 19, i.e., with the complementary bearing surfaces in the mounting cavity 70 discussed below. In this way, the front and rear bearing surfaces 30-34, 51-55 can provide stabilization around the entire nose 19 for vertical, side and combination loads. The front bottom bearing surfaces 32,33 have a downward pointed pentagon as this aligns with end of life wear at the front end of the nose 19. Likewise, the top rear bearing surfaces 51, 55 have an upward pointed pentagon as this aligns with end of life wear at the rear end of the nose 19. The rear bottom bearing surface is preferrable horizontal (e.g., parallel to the lip centerline) because this aligns with the features of the bottom leg 48b. The front top bearing surface is horizontal to well resist downward loads.

The transition portion 27 includes transition surfaces 40-44, 46-50 that preferably axially extend rearwardly at angles that are greater than substantially parallel to the longitudinal axis for increased nose strength and penetration. In the illustrated embodiment, the transitions surfaces include top transition surfaces 40, 41, 42, side transition surfaces 43, 44, 46, 47, and bottom surfaces 48, 49, 50. The transition portion 27 transforms bearing surfaces 30-34 in front portion 26 into corner surfaces 57 in the rear portion 28. Likewise, the transition portion 27 transforms the corner surfaces 37 in the front portion 26 to bearing surfaces 51-55 in the rear portion 28. In the illustrated example, the bottom corner surface 37 (also related to the top point of a pentagon shape) is adjacent bottom transition surface 49 to transition to a bottom bearing surface 53, and so on.

One or both of the respective side transition surfaces 43, 44, 46, 47 may include a lock cutout portion 59 and a lock hole 61. The hole(s) can be blind hole. If a hole is provided in both sides, the holes can each be blind holes, or they can be opposite ends of a through-hole in the nose. The cutout portion 59 allows the lock 17 to be located closer to the center of the tooth 11 thereby reducing the sidewall thickness of the point 45. In some examples, the side transition surfaces 43, 44, 46, 47 are substantially aligned with a vertical plane to create generally vertical sidewalls. This arrangement may make certain lock variations more ergonomic for operators installing and removing the wear members.

Referring to FIGS. 9-11, a wear member 45 in the form of a point is illustrated to fit on nose 19, though the wear member could have other configurations and/or purposes, e.g., the wear member could be intermediate adapter 14' or other wear members. In the illustrated embodiment, the wear member 45 includes a front working end 66 and a rear mounting end 74. While the working end 66 is shown as a linear bit projection from mounting end 74, it need not be; the bit may be offset from the longitudinal axis 35. The mounting end 74 is formed with a socket 70 that receives nose 19 for supporting the wear member 45 on the earth working equipment (not shown). The socket 70 is formed by front and rear portions 94, 96 each having interior top, bottom, and side walls. The rear portion 96 is adjacent a second blended area that complements the blended area of the nose 19. Preferably, the socket 70 has a shape that is complementary to nose 19, though some variations could be included.

In one example, the socket 70 includes a plurality of front bearing surfaces 130-134 at the front portion 94 of the socket 70. In the illustrated example, the front portion 94 of the socket 70 is generally pentagonal shaped and includes bottom bearing surfaces 132,133; top bearing surface 130; and side bearing surfaces 131, 134 to match at least a portion of the front portion 26 of the nose 19, but other shapes are possible. Front wall 98 is also bearing as well. For example, while surfaces 130-134 are preferably planar, they can be convex, concave, curved or consisting of angular segments. Adjacent front bearing surfaces may be connected by a corner 137, which is generally rounded. The length of each bearing surface 130-134 extending rearwardly may be equivalent to the front portion 26 of the nose 19, but other configurations are possible. For example, the lengths of each bearing surface 130-134 may be less than the lengths of the front bearing surfaces 30-34. In this case, only a portion of bearing surfaces 30-34 would be engaged at any one time. The front wall 98 may be inclined or perpendicular to the longitudinal axis 35 to complement front wall 36. For example, the front wall 98 may be at a transverse angle that aligns with the transverse angle of the front face 36.

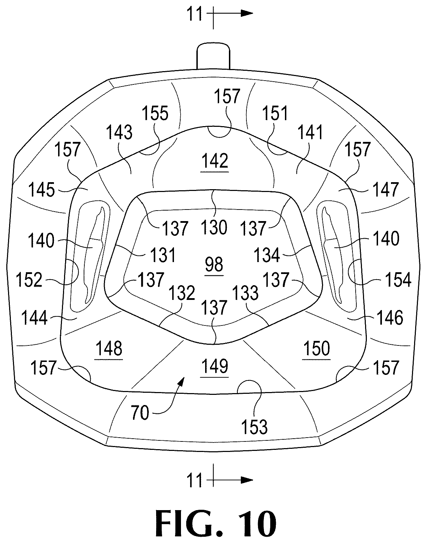

With reference to FIG. 10, the socket 70 includes a plurality of bearing surfaces 151-155 at the rear portion 96 or open end of the socket 70. In the illustrated example, a rear portion 96 of the socket 70 is generally pentagonal shaped and includes a bottom bearing surface 153; top bearing surfaces 151, 155; and side bearing surfaces 152, 154 to match at least a portion of the rear portion 28 of the nose 19. For example, while surfaces 151-155 are preferably planar, they can be convex, concave, curved or consisting of angular segments. The top rear bearing surfaces 151, 155 each converge upwardly in a transverse direction to a corner 157 of a pentagon at 180 degrees shift from the corner 137 where the bottom front bearing surfaces 132, 133 converge at the front portion 96 of the socket 70. Preferably, angled bearing surfaces 132,133 and 151, 155 are symmetrically shifted 180 degrees from the other. Adjacent bearing surface 151-155 may be connected by a corner 157, which is generally rounded. The length and/or width of each bearing surface 151-155 may be equivalent to the bearing surfaces 51-55 of the rear portion 28 of the nose 19, but other configurations are possible. For example, the length and/or width of each bearing surface 151-155 may be less than the lengths of the rear bearing surfaces 51-55. In this case, only a portion of bearing surfaces 51-55 would be engaged at any one time. The rear bearing surfaces 151-155 define a cavity opening 164 at the rear end 74 of the point 45 to receive the nose 19 of the adapter 14.

Preferably, the bearing surfaces 130-134, 151-155 in the point are designed to match those formed on the nose 19; that is, if the bearing surfaces 30-34, 51-55 in the nose diverge at an angle of about 2 degrees relative to the longitudinal axis 35, then, the bearing surfaces 130-134, 151-155 of the socket 70 also diverge at an angle of about 1-2 degrees to the longitudinal axis 35.

When loads having downward vertical components (herein called vertical loads L1) are applied along the digging edge 66 of point 45, the point 45 is urged to roll forward off the nose. For example, when a downward load L1 is applied to the top of digging edge 66 (Figure 1) of the point 45, the point 45 is urged to roll forward on nose 19 such that front bearing surface 130 in socket 70 bears against bearing surface 30 at front end 26 of nose 19. The bottom, rear portion 96 of point 45 is also drawn upward against the bottom rear portion of nose 19 such that rear bearing surface 153 in the socket 70 bears against the rear lower bearing surface 53 on the nose 19. As a result, the point 45 is stably supported on the nose 19, which increases the strength and stability of the base, reduces wear, and enables the use of smaller locks 17. In another example, when an upward vertical load is applied to the bottom of the digging edge 66 of the point 45, the point is urged to roll upward and off on the nose 19, such that front bearing surfaces 132, 133 in socket 70 bear against bearing surface 32, 33 at the front end of the nose. And the top rear portion 96 of the point is also drawn downward against the bottom rear portion of the nose, such that rear bearing surfaces 151, 155 in the socket 70 bear against the rear upper bearing surfaces 51, 55. Surfaces 30-34, 52, 54, 130-134, 152, and 154 function in the same way for example for side loads (L2). The angled orientation of bearing surfaces 32, 33, 51, 55 of the nose enable the bearing surfaces 132, 133, 151, 155 in socket 70 to resist side and vertical loading.

The laterally inclined surfaces 32, 33, 51, 55, 132, 133, 151, 155 in in the front and the rear of the nose 19 and socket 70 are able to resist vertical and side loads and reduce the shifting between the point and nose as the loads shift as the points are forced through the ground in a digging operation to provide a stable mounting and less wear.

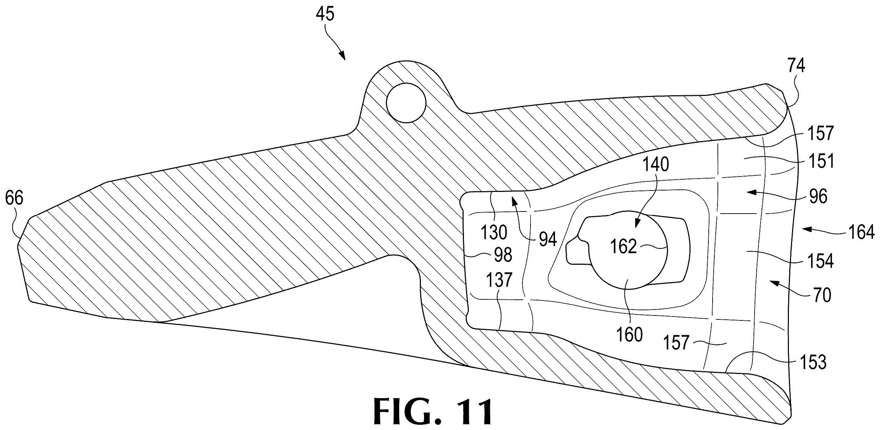

The top, bottom, and side walls 141-150 of the socket 70 extend from the front portion 94 to the rear portion 96. The top, bottom, and side walls 141-150 of the socket 70 generally converge toward the front portion 94 of the socket 70; wide variations are possible for the surfaces in the transition section so long as they generally transition from the larger rear portion to the smaller front portion. In the illustrated example of FIG 11, the top, bottom, and side walls 141-150 are contoured, but other configurations are possible. The top, bottom, and side walls 141-150 transforms the front bearing surface 130-134 in the front portion 94 to a corner surface 157 in the rear portion 96. Likewise, the top, bottom, and side walls 141-150 transforms the rear bearing surface 151-155 to a corner surface 137.

The illustrated point 45 includes an opening 140 on each side that generally aligns with the lock hole 61 of the adapter 14 when the point 45 is assembled onto nose 19 (FIG. 2). The lock hole 61 and opening 140 collectively define a lock opening 160 for receiving a lock 17 (FIG. 1). Each opening 140 is located in one of the side walls 144-147 of point 45 for receiving the lock 17. The opening 140 may be generally circular to mate with the illustrated lock hole 61 of the nose 19, though other configurations are possible. For example, the side walls 144-147 may each include a projecting pocket for portions of the lock to fit in, though other configurations are possible. Within socket 70, each opening 140 is open on both its inner and outer sides and otherwise defined by an interior surface 162. The interior surface 162 may have retaining structures 166 thereon. Although point 45 may be secured by only one lock 17, the illustrated point 45 includes two lock openings 140, one along each sidewall 144-147 for two locks 17 to be installed, but other configurations are possible. Single or multiple locks may also be located in other surfaces of the wear member and base. In situations of asymmetric wear (e.g. corner teeth), a single lock may be swapped to the other side. With the two openings 140, the point 45 can alternatively utilize one of the lock openings 140 for attachments, such as sensors, plugs, and/or end of life attachments, such as in U.S. App. Ser. No. 16/888,389 and 16/125,636, both of which are incorporated by reference in its entirety herein. The lock openings 140 are illustrated to be identical, but other configurations are possible.

As noted above, lock 17 is used to releasably secure a wear member to a base. When the lock 17 is inserted into hole 160, it opposes interior 62 of hole 61 and engages at least side wall 162 of the opening 140 of the point 45 to prevent release of point 45 from nose 19. In general, the lock 17 includes a body 165 for holding point 45 to nose 19, and a collar for engaging retaining structure 166 in the projection of the point 45 for securing the lock 17 in hole 160 for both a shipping position and a locked position. The lock 17 may be a type of lock including the pin and collar lock of U.S. 9,222,243, the entirety of which is incorporated by reference herein. The lock 17 may include a shipping position within the hole that allows the lock 17 to remain in the lock opening 140 while the nose 19 is installed and a locked position that locks the point 45 to the adapter 14 with the lock 17 in the lock hole 61 of the adapter 14.

Many other lock designs could be used to secure the wear member to the nose. For example, lock 17 may be a conventional sandwich pin construction, which is hammered into the assembly. Such a lock could also pass through holes in the centers of the nose and point, either vertically or horizontally, in a well-known manner.

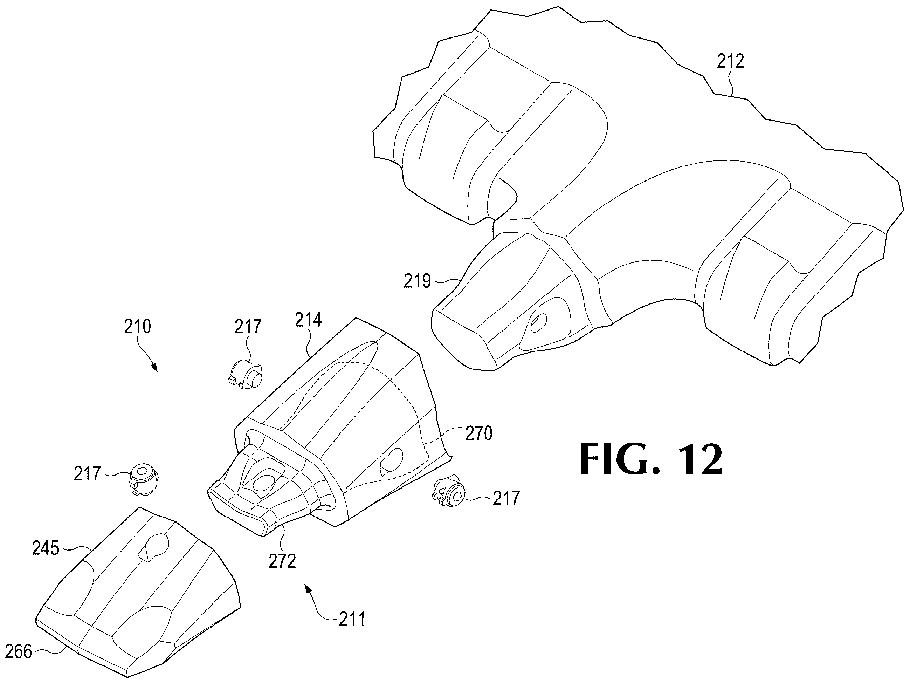

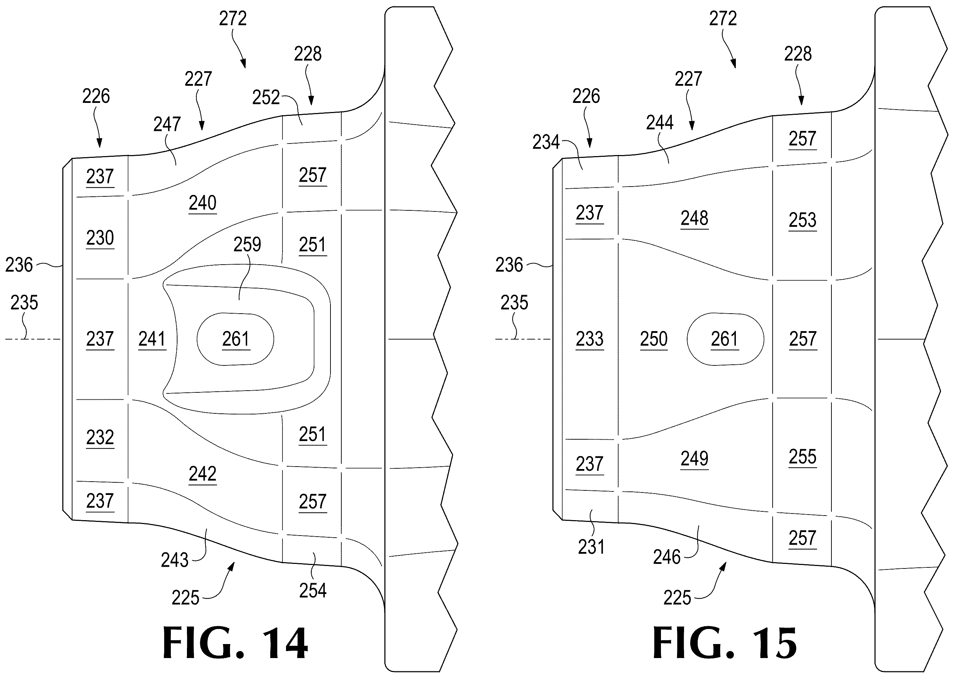

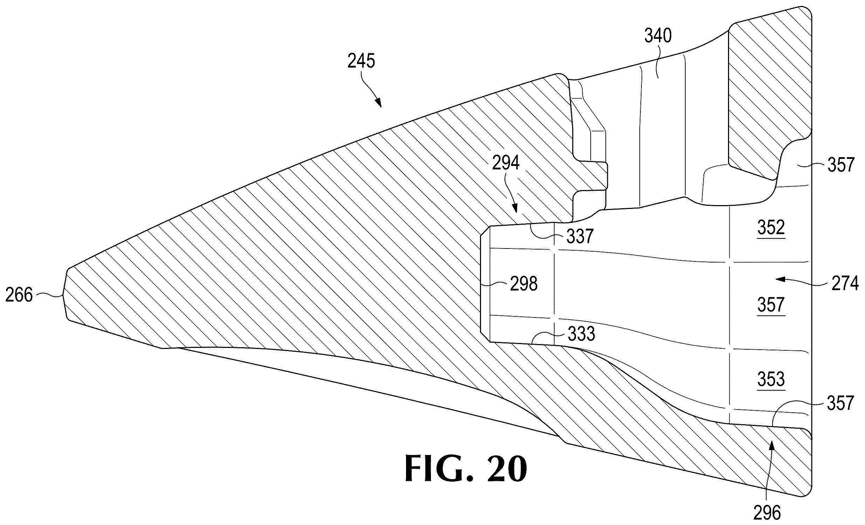

In the example of FIGS. 12-20, a wear assembly 210 includes a tooth 211 having a wear member or tip 245 that releasably secures to the nose 272 of a second wear member or intermediate adapter 214, which in turn, mounts onto a support structure or base 212 of an earth working equipment.

While a tooth with an intermediate adapter is included in the illustrated example, the tooth 211 could omit the intermediate adapter. For example, a point could mount directly on an integral nose or base adapter nose shaped similar to nose 272. Additionally, a base shaped like nose 272 could support other wear members such as shrouds, wing shrouds, and the like. Likewise, while the illustrated support structures are lips of a bucket, the support structures could be the front edges of bucket sidewalls, dredge cutter heads, rolling drums, blades, etc. Locks 217 are used to releasably secure the tooth to the base and the tip to the intermediate adapter, such as, e.g., disclosed in U.S. Patent 9,222,243 (incorporated herein by reference). In this example, the same kind of lock is used in both cases, but different locks could be used. For example, the locks disclosed in U.S. Provisional Application 63/176,065, incorporated by reference herein.

In the illustrated example, the digging edge 212 is substantially similar to the digging edge 12' of Fig. 2B. The base 212 is illustrated as including a forwardly-projecting nose 219 as part of a cast lip instead of a separately secured adapter (see, e.g., FIG. 2A). Nevertheless, a base adapter could be secured to the digging edge (as shown in Fig. 2A) in lieu of the illustrated integral nose. The intermediate adapter 214 supports the earth-penetrating tip 245 on the digging edge 212. The intermediate adapter 214 includes a forwardly projecting nose 272 for mounting the tip 245 and a mounting end 274 to receive the digging edge nose 219. In this example, nose 219 and cavity 270 have the same design as nose 19 and cavity 70, but they could have a different designs including, e.g., a nose and cavity such as in U.S. Patent 7,882,649, a nose and cavity similar to the design of nose 272 and cavity 274, etc.

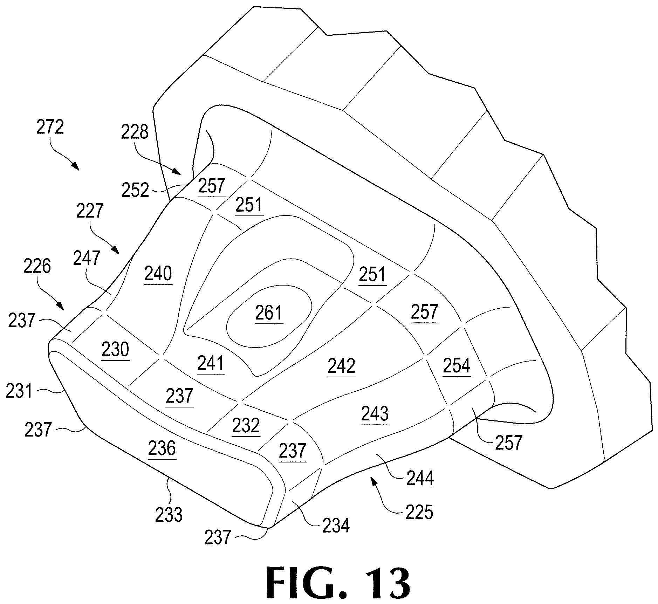

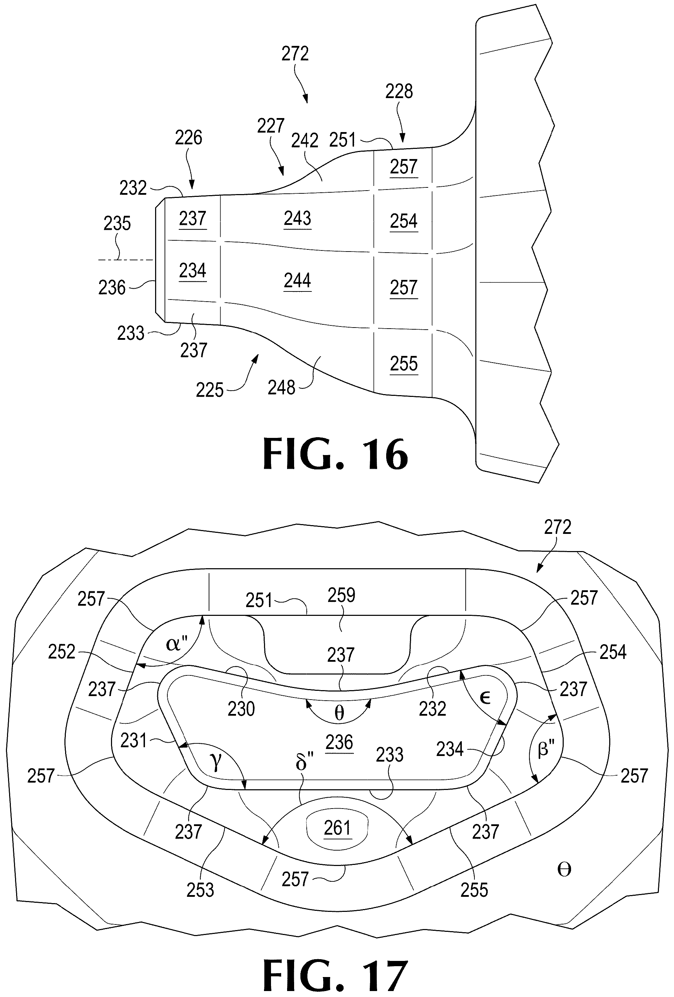

Referring to FIGS. 13-17, the nose 272 has a body 225 with a front portion 226, a rear portion 228, and a transition portion 227 (FIG. 16). The body 225 expands rearward from the front portion 226 to the rear portion 228. In this example, the transition portion 227 expands vertically and horizontally, but it could expand in just one direction (e.g., vertically) aside from a possible taper for manufacturing and/or ease of release purposes. The transition portion 227 is located between the front portion 226 and the rear portion 228 of the nose 272. The rear portion 228 is adjacent a blended area that transitions to a rear body of the intermediate adapter 214 defining mounting cavity 270.

In the illustrated example, the front portion 226 includes front bearing surfaces 230, 231, 232, 233, 234 and a front bearing wall 236 transverse to the front bearing surfaces 230-234, though other variations are possible. More particularly, the front bearing surfaces includes top bearing surfaces 230, 232, side bearing surfaces 231, 234, and a bottom bearing surface 233. The front bearing surfaces 230-234 and front wall 236 bear against complementary surfaces at the front of the mounting cavity or socket 274 in the second wear member 245.

The front wall 236 resists rearward loads L3 (such as illustrated in FIG. 1). The bearing surfaces 230-234 could bear against complementary surfaces in the point across their entire width and length or some portions thereof. In the illustrated example, the front bearing surfaces 230-234 are generally planar though they could be formed with curves such as broad convex or concave shapes curving about axial and/or transverse axes or any combination with planar surfaces thereof. The front bearing surfaces 230-234 extend rearwardly to the transition section 227.

The front bearing surfaces 230-234 extend rearwardly from front surface 236 and axially extend substantially parallel to a longitudinal axis 235 to help stabilize the supporting of the second wear member 245. The term "substantially parallel" is intended to include parallel surfaces as well as those that diverge from the longitudinal angle at a small angle (e.g., of about 0-7 degrees) for manufacturing purposes and/or ease of removal. The front bearing surfaces preferably axially diverge in a rearward direction from the longitudinal axis 235 at an angle of 5 degrees or less, and most preferably at an angle of 3 degrees or less. The longitudinal axis 235 is the longitudinal axis of the nose 272 and mounting cavity 274 within the second wear member 245. The longitudinal axis 235 can be generally defined as the straight line the center of front wall 236 moves along when installed into mounting cavity 274. The bearing surfaces 230-234 that extend substantially parallel to the longitudinal axis are also herein referred at times to stabilizing surfaces. Stabilizing surfaces are meant to stabilize the wear member 245 mounted onto the nose 272 against vertical, lateral, and combination loads.

In the illustrated embodiment, the front wall 236 and the front portion 226 have a generally five sided shape, though other surfaces could be provided at one or more the corners. In some examples, the front wall may have other polygonal shapes. In the illustrated example, front wall 236 is perpendicular to longitudinal axis 235. In other examples, the front wall 236 may optionally be inclined to the longitudinal axis preferably such that the front wall 236 and top surface 230 are at an acute angle, though other orientations are possible. In the illustrated example, the front face is planar, but can be convex, concave, curved or consisting of angular segments.

In the orientation of FIG. 17, the bottom surface 233 is substantially parallel to a horizontal plane. The top bearing surfaces 230, 232 each converge downwardly towards each other in a transverse direction to create an inverse corner 237 of the pentagonal shape. In other examples, nose 272 could be inverted such that the top bearing surfaces 230, 232 may be the bottom of the front portion 226, and where the inverse or inwardly directed surfaces converges upward (instead of downward as illustrated). In the illustrated example, the side bearing surfaces 231, 234 converge in an upwardly, transverse direction, though they could be vertical or converge in a downward direction.

Adjacent bearing surfaces 230-234 may be connected by a corner 237, which is generally rounded, though other configurations are possible. In another example, the surfaces 230-234 may meet at an edge. The corners 237 in the front portion 226 create angles γ between adjacent bearing surfaces 231, 234 and bearing surface 233 (e.g. 116 degrees); angles ε between bearing surfaces 231, 234 and bearing surfaces 230, 232 (e.g. 52 degrees); and angle θ between top bearing surfaces 230 and 232 (e.g. 205 degrees). The angles γ, ε, θ may generally range from 50-230 degrees (within 2± degrees), but other examples are possible outside the given ranges. The angles and general overall front configuration of the nose (i.e., the bearing surfaces 230-234) can vary considerably. For example, one side of the bearing surfaces 230-234 may have a different angle γ, ε, than the other side, such that an non-uniform shape (e.g. non-uniform or non-mirrored about the vertical axis pentagon) is created. In one such example, the surfaces 230-234 may not be uniform in length to better accommodate a lock on one side.

The rear portion 228 includes rear bearing surfaces 251, 252, 253, 254, 255. The rear bearing surfaces 251-255 extend rearwardly from the transition portion 227 and include top rear bearing surface 251, side rear bearing surfaces 252, 254, and a bottom rear bearings surface 253, 255. The rear bearing surfaces 251-255 are tiered (i.e., spaced farther apart) relative to front bearing surfaces 230-234 for enhanced strength, removability, and operation. The rear portion 228 of the nose 272 may align with the shape and orientation (e.g. downward pointed pentagon) similar to the front portion 26 of the nose 19, but other configurations are possible.

As discussed above, noses 19 and 272 each has front and rear portions. In nose 19, the bottom surfaces on the front portion and the top surfaces on the rear portion converge in a direction away from the longitudinal axis. In nose 272, the top surfaces on the front portion converge in a direction toward the longitudinal axis, whereas the bottom surfaces on the rear portion converge away from the longitudinal axis 235. Other variations are possible. For example, the converging surfaces on the front portion could be on the top or bottom of the nose (or mounting cavity) and/or could converge away from or toward the longitudinal axis. Likewise, regardless of the front portion design, the converging surfaces on the rear portion could be on the top or bottom of the nose (or mounting cavity) and/or could converge away from or toward the longitudinal axis.

The bearing surfaces 251-255 along with the front bearing surfaces 230-234, axially extend substantially parallel to the longitudinal axis 235 to aid in stabilizing and supporting the wear member 245; e.g., where they rearwardly diverge at a small angle to the longitudinal axis 35. The bearing surfaces 251-55 that extend substantially parallel to the longitudinal axis are also herein referred at times to stabilizing surfaces. The rear bearing surfaces 251-255 bear against corresponding surfaces in the mounting cavity 274 of the wear member 245, and along with the front bearing surface 230-234 act as stabilization surfaces for the wear member 245. The front bearing surfaces 230-234, 236 bear against complementary surfaces in the mounting cavity 274 in wear member 245 in resisting various combinations of vertical, side, rotation, and axial loads (e.g., L1, L2, L3, R1 as seen in Fig. 1) that are applied to the wear member 245 during a digging operation.

Like the front portion 226, the rear portion 228 preferably has a generally pentagonal shape. The rear portion 228 has a reverse orientation (e.g. rotated 180 degrees) with respect to the front portion 226. In that, the corners 237 align with a bearing surface 251-255 in the rear portion 228 and vice versa, the corners 257 align with a front bearing surface 230-234. The rear bearing surfaces 251-255 are in the illustrated embodiment oriented 180 degrees relative to the orientation of the front bearing surfaces 230-234.

In the illustrated example, the front and rear portions 226, 228 have bearing surfaces that each converge downward. The bearing surfaces may not align at the same angle. Referring to FIG. 17, the bottom rear bearing surfaces 253, 253 converge downwardly towards each other, though other configurations are possible. In one such example, the bottom rear bearing surfaces 253, 255 may be flipped in orientation about the longitudinal axis, such that they converge upward and are located on the top surface. In this example, it is envisioned that surfaces 230, 232 would be rotated to be on the bottom surface. In the illustrated orientation, the top rear bearing surface 251 is substantially parallel to a horizontal plane. The side rear bearing surfaces 252, 254 converge upwardly, but other configurations are possible. Adjacent bearing surface 251-255 may be connected by a corner 257, which is generally rounded. The corners 257 create: angle α" between top rear bearing surfaces 251 and side rear bearing surfaces 252 and 254; angle β" between side rear bearing surfaces 252, 254 and bottom rear bearing surfaces 253, 255; and angle δ" between bottom rear bearing surfaces 253 and 255. In one example, α", β", δ" are substantially similar to α, β, δ of the nose 19.

In another example, one side of the rear bearing surfaces 251-255 may have a different angle α", β" than the other side of the rear bearing surfaces 251-255, such that an non-uniform or non-mirrored about a vertical axis shape is created. In this instance, the surfaces 251-255 may not be uniform in length. In one such example, the bearing surfaces in one or both the front and rear portions can have different lengths and/or different corner angles on one side of the nose as compared to the other side. Alternatively, the rear bearing surfaces 251-255, could be formed with a curve (instead of a flat), such as a broad convex or concave curve about a longitudinal and/or transverse axis, as disclosed above for the front bearing surfaces 230-234.

The transition portion 227 includes transition surfaces 240-244, 246-250 that preferably axially extend rearwardly at angles that are greater than substantially parallel to the longitudinal axis for increased nose strength and penetration. In the illustrated embodiment, the transitions surfaces include top transition surfaces 240, 241, 242, side transition surfaces 243, 244, 246, 247, and bottom surfaces 248, 249, 250. The transition portion 227 transforms bearing surfaces 230-234 in front portion 226 into corner surfaces 257 in the rear portion 228. Likewise, the transition portion 227 transforms the corner surfaces 237 in the front portion 226 to bearing surfaces 251-255 in the rear portion 228. In the illustrated example, the bottom corner surface 237 (also related to the top point of a pentagon shape) is adjacent bottom transition surface 248 to transition to a bottom bearing surface 253, and so on.

One or both of the respective top transition surfaces 240, 241, 242 and bottom transition surface 250 may include a lock cutout portion 259 and a lock hole 261. The hole(s) can be blind hole. The cutout portion 259 allows the lock 217 to be located closer to the center of the tip 245. This arrangement may make certain lock variations more ergonomic for operators installing and removing the wear members and protects the lock against wear.

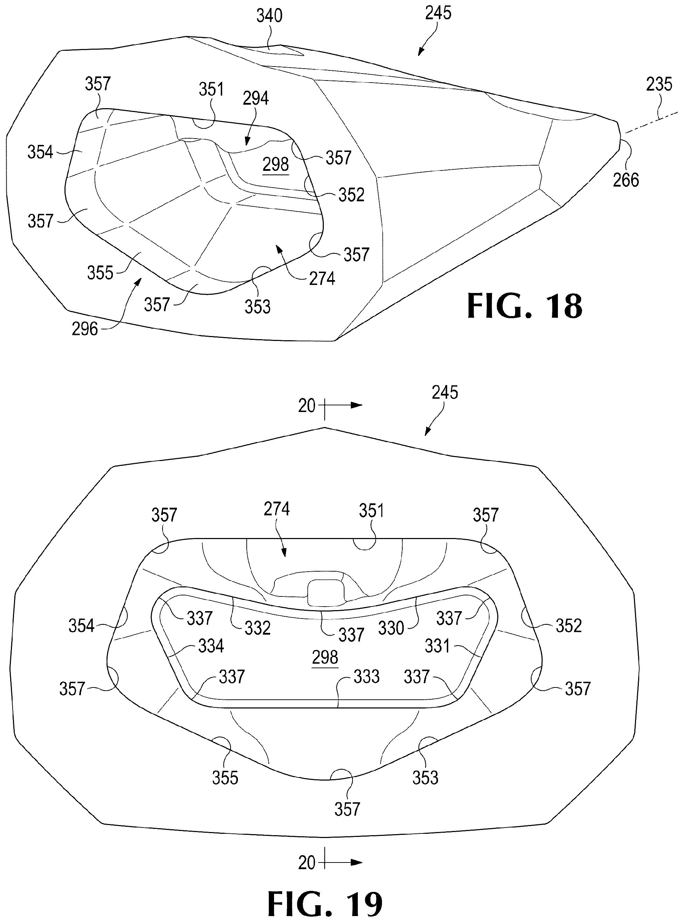

Referring to FIGS. 18-20, a wear member 245 in the form of a tip is illustrated to fit on nose 272, though the wear member could have other configurations and/or purposes. In the illustrated embodiment, the wear member 245 includes a front working end 266 and a rear mounting end 274. While the working end 266 is shown as a linear bit projection from mounting end 274, it need not be; the bit may be offset from the longitudinal axis 35. The mounting end 274 is formed with a socket 274 that receives nose 272 for supporting the wear member 245 on the earth working equipment. The socket 274 is formed by front and rear portions 294, 296 each having interior top, bottom, and side walls. The rear portion 296 is adjacent a second blended area that complements the blended area of the nose 272. Preferably, the socket 274 has a shape that is complementary to nose 272, though some variations could be included.

In one example, the socket 274 includes a plurality of front bearing surfaces 330-334 at the front portion 294 of the socket 274. In the illustrated example, the front portion 294 of the socket 274 is generally pentagonal shaped and includes bottom bearing surface 333; top bearing surfaces 330, 332; and side bearing surfaces 331, 334 to match at least a portion of the front portion 226 of the nose 272, but other shapes are possible. Front wall 298 is bearing as well. For example, while surfaces 330-334 are preferably planar, they can be convex, concave, curved or consisting of angular segments. Adjacent front bearing surfaces may be connected by a corner 337, which is generally rounded. The length of each bearing surface 330-334 extending rearwardly may be equivalent to the front portion 226 of the nose 272, but other configurations are possible. For example, the lengths of each bearing surface 330-334 may be less than the lengths of the front bearing surfaces 230-234. In this case, only a portion of bearing surfaces 330-334 would be engaged at any one time. The front wall 298 may be inclined or perpendicular to the longitudinal axis 235 to complement front wall 236.

The socket 274 includes a plurality of bearing surfaces 351-355 at the rear portion 296 or open end of the socket 274. In the illustrated example, a rear portion 296 of the socket 274 is generally pentagonal shaped and includes bottom bearing surface 353, 355; top bearing surfaces 351; and side bearing surfaces 352, 354 to match at least a portion of the rear portion 228 of the nose 272. For example, while surfaces 351-355 are preferably planar, they can be convex, concave, curved or consisting of angular segments. The bottom rear bearing surface 353, 355 each converge downwardly at 180 degrees shift in a transverse direction to a bottom corner 337 of the five sided shape of the front portion 298. The bottom rear bearing surfaces 333 converge at the rear portion 298 of the socket 274 to corner 357. The angled bearing surfaces 330, 332 and 353, 355 are symmetrically shifted 180 degrees from the other, although they are sloped in the same direction (e.g. downward). Adjacent bearing surface 351-355 may be connected by a corner 357, which is generally rounded. The length and/or width of each bearing surface 351-355 may be equivalent to the bearing surfaces 251-255 of the rear portion 228 of the nose 272, but other configurations are possible. For example, the length and/or width of each bearing surface 351-355 may be less than the lengths of the rear bearing surfaces 251-255. In this case, only a portion of bearing surfaces 351-355 would be engaged at any one time. The rear bearing surfaces 351-355 define a cavity opening 274 at the rear end 274 of the point 245 to receive the nose 272 of the intermediate adapter 214.

Preferably, the bearing surfaces 330-334, 351-355 in the point 245 are designed to match those formed on the nose 272; that is, if the bearing surfaces 230-234, 251-255 in the nose diverge at an angle of about 2 degrees relative to the longitudinal axis 235, then, the bearing surfaces 330-334, 351-355 of the socket 274 also diverge at an angle of about 1-2 degrees to the longitudinal axis 235.

The top, bottom, and side walls of the socket 274 extend from the front portion 294 to the rear portion 296. The top, bottom, and side walls of the socket 274 generally converge toward the front portion 294 of the socket 274; wide variations are possible for the surfaces in the transition section so long as they generally transition from the larger rear portion to the smaller front portion. The top, bottom, and side walls transforms the front bearing surface 330-334 in the front portion 294 to a corner surface 357 in the rear portion 296. Likewise, the top, bottom, and side walls transforms the rear bearing surface 351-355 to a corner surface 337.

The illustrated tip 245 includes an opening 340 on the top and bottom that generally aligns with the lock hole 261 of the adapter 214 when the tip 245 is assembled onto nose 272. The lock hole 261 and opening 340 collectively define a lock opening 261 for receiving a lock 217 (FIG. 12). As noted above, lock 217 is used to releasably secure a wear member to a base. The lock 217 may be a type of lock including the pin and collar lock of U.S. 9,222,243, the entirety of which is incorporated by reference herein.

## Claims

1. A mounting portion (19, 19') for a bucket lip for mounting a wear member (14, 14') thereon, the mounting portion (14, 14') including a front portion (26) and a rear portion (28),
- the front portion (26) including a first front bearing surface (30) on a top or bottom side of the mounting portion (19, 19'), two second front bearing surfaces (32, 33) on the top or bottom side of the mounting portion (19, 19') opposite the first front bearing surface (30), and a front bearing wall (36) transverse to the front bearing surfaces (30, 32, 33) at a front end of the mounting portion (19, 19'), the two second front bearing surfaces (32, 33) converging away from the first front bearing surface (30) toward a central portion of the top or bottom side, wherein the front bearing surfaces (30, 32, 33) and the front bearing wall (36) bear against complementary surfaces on the wear member (14, 14'), and
- the rear portion (28) including a first rear bearing surface (53) on the top or bottom side of the mounting portion (19, 19') opposite the first front bearing surface (30), and two second rear bearing surfaces (51, 55) on the top or bottom side of the mounting portion (19, 19') opposite the first rear bearing surface (53), the second rear bearing surfaces (51, 55) converging away from the first rear bearing surface (53) toward a central portion of the top or bottom side, wherein the rear bearing surfaces (51, 53, 55) bear against complementary surfaces on the wear member (14, 14') **characterised in that** the two second rear bearing surfaces (51, 55) extend transversely beyond the first rear bearing surface (53).

2. The mounting portion according to claim 1, wherein the mounting portion (19) is a nose of an adapter (14) for a bucket lip.

3. The mounting portion according to claim 1, wherein the mounting portion (19') is a forwardly-projecting nose as part of a cast lip.

4. The mounting portion according to any preceding claim, wherein the first front bearing surface (30) is located on the top side of the mounting portion (19, 19') and the first rear bearing surface (53) is located on the bottom side of the mounting portion (19, 19').

5. The mounting portion according to any preceding claim, wherein the mounting portion (19) being a nose (paragraph [0021]) the front and rear surfaces (26, 28) define a pentagonal shape.

6. The mounting portion according to any of claims 1 to 4, wherein the front portion (26) and the rear portion (28) are formed with a generally pentagon configuration in the front and a reverse pentagon configuration in the rear.

7. The mounting portion according to any preceding claim, wherein the mounting portion (19, 19') includes a longitudinal axis (35) extending in a direction, and each of the front and rear bearing surfaces (30, 32, 33, 51, 53, 55) axially extend substantially parallel to the longitudinal axis (35).

8. The mounting portion according to any of claims 1 to 6, wherein the mounting portion (19, 19') includes a longitudinal axis (35) extending in a direction, and each of the front and rear bearing surfaces (30, 32, 33, 51, 53, 55) axially extend at an angle of five degrees or less to the longitudinal axis (35).

9. The mounting portion according to any preceding claim, wherein the rear portion (28) includes side rear bearing surfaces (52, 54) converging upwardly.

10. The mounting portion according to claim 9, wherein the rear portion (28) includes five generally rounded corners (57) each corner (57) located between and connecting adjacent rear bearing surfaces (51 - 55).

11. The mounting portion according to claim 10, wherein the front portion (26) includes front side bearing surfaces (31, 34) converging in an upwardly transverse direction.

12. The mounting portion according to claim 11, wherein the front bearing surfaces (30 to 34) extend rearwardly from the front bearing surface (36) and axially extend substantially parallel to a longitudinal axis (35).

13. The mounting portion according to claim 12, wherein the front portion (26) includes five generally rounded corners (37) each corner (37) located between and connecting adjacent front bearing surfaces (30 - 34).

14. The mounting portion according to claim 13, wherein each of the corners (37) of the front portion (26) are axially aligned with one of the rear bearing surfaces (51 - 55) of the rear portion (28), and each of the corners (57) of the rear portion (28) are axially aligned with one of the front bearing surfaces (30 - 34) of the front portion (26).

15. The mounting portion according to claim 14, wherein the rear bearing surfaces (51 - 55) are oriented 180 degrees relative to the orientation of the front bearing surfaces (30 - 34).

16. A lip of a bucket comprising the mounting portion (19, 19') of any preceding claim.
